# EUROPEAN PATENT APPLICATION

(11) **EP 4 807 526 A1**
(43) Date of publication of application: **16.09.2026**
(21) Application number: 26163643.5
(22) Date of filing: 10.03.2026
(51) Int. Cl.: G06F 3/16

(54) **AUTOMATED DATA EXCHANGE SESSIONS BETWEEN PHYSICALLY COLLOCATED USER DEVICES**

(30) Priority: 10.03.2025 US 202519075546
(71) Applicant: GDM Holding LLC, Mountain View CA 94043 (US)
(72) Inventor: HARTMANN, Florian Nils, Zurich (CH); SHARIFI, Matthew, Kilchberg (CH)
(74) Representative: Varley, James Richard

(57) **Abstract**

Methods, systems, and apparatus, including computer programs encoded on computer storage media, for updating a local operating state of a first user device. In one aspect, a method includes identifying a context of the first user device; identifying a second user device within a proximity of the first user device; determining relevant aspects of a local operating state of the first user device that are relevant to the context; performing an automated data exchange session between a first agent executing on the first user device and a second agent executing on the second user device to determine one or more actions that each define an update to the local operating state; and performing the one or more actions by the first user device to update the local operating state of the first user device.

## Description

### BACKGROUND

An agent (also known as an "automated assistant," "personal assistant," "mobile assistant," etc.) can be interacted with by a user through a variety of user devices including, e.g., smart phones, tablet computers, wearable devices, automobile systems, standalone personal assistant devices, and so forth. For example, an agent can receive input from the user including spoken natural language input (i.e., utterances) and respond by performing an action, by controlling another device and/or providing responsive content (e.g., visual and/or audible natural language output).

Some agents can utilize neural networks when responding to inputs from the users.

Neural networks are machine learning models that employ one or more layers of nonlinear units to predict an output for a received input. Some neural networks include one or more hidden layers in addition to an output layer. The output of each hidden layer is used as input to the next layer in the network, i.e., another hidden layer or the output layer. Each layer of the network generates an output from a received input in accordance with current values of a respective set of parameters.

### SUMMARY

This specification describes how to update a local operating state of a user device by performing an automated data exchange session that includes one or more conversation turns generated by using one or more generative neural networks.

According to an aspect, there is provided a method performed by one or more computers, the method comprising: identifying a context of a first user device; identifying a second user device within a proximity of the first user device; determining relevant aspects of a local operating state of the first user device that are relevant to the context; performing an automated data exchange session between a first agent executing on the first user device and a second agent executing on the second user device to determine, based on the relevant aspects of the local operating state of the first user device, one or more actions that each define an update to the local operating state; and performing the one or more actions by the first user device to update the local operating state of the first user device.

The one or more actions may comprise an action to display audio content by an audio output device of the first user device.

The one or more actions may comprise an action to display visual content by a display device of the first user device.

The one or more actions may comprise an action to adjust one of a plurality of adjustable settings of the first user device.

The plurality of adjustable settings may comprise: a volume level setting, a brightness level setting, an airplane mode setting, or a sleep mode setting.

Performing the conversation session may comprise: transmitting a first conversation turn from the first user device to the second user device, the second conversation turn being generated by using a generative neural network by processing a prompt that includes data generated based on the relevant aspects of the local operating state of the first user device.

Performing the conversation session may comprise: receiving a second conversation turn by the first user device from the second user device, the second conversation turn being generated by the generative neural network based on processing a prompt that includes data stored in an application executing on the second user device.

The generative neural network may be implemented on the first user device.

The generative neural network may be implemented on a server that is remote from the first user device.

According to another aspect, there is provided a method performed by one or more computers, the method comprising: performing an automated data exchange session between a first agent executing on a first user device and a second agent executing on the second user device to determine one or more actions that each define an update to a local operating state of the first user device, wherein the automated data exchange session comprises one or more conversation turns that are generated by using a generative neural network; and performing the one or more actions by the first user device to update the local operating state of the first user device.

According to another aspect, there is provided one or more computer-readable storage media encoded with instructions that, when executed by one or more computers, cause the one or more computers to perform the operations of the above method aspects.

According to yet another aspect, there is provided a system comprising one or more computers and one or more storage devices storing instructions that when executed by one or more computers cause the one or more computers to perform the respective operations of the above method aspects.

It will be appreciated that features described in the context of one aspect may be combined with features described in the context of another aspect.

The subject matter described in this specification can be implemented in particular embodiments so as to realize one or more of the following advantages. Techniques described in this specification can enable an agent executing on a user device to update the local operating states of the user device as needed - for example to jointly perform collaborative tasks (e.g., to reduce human involvement and human error as well as increase production efficiency when performing these collaborative tasks), share information with one other, agree on common settings (e.g., to extend the operational duration of the user device on battery), or in certain cases coordinate with one another in the same physical space (e.g., to share important context or social norms).

The described techniques can update the local operating states of the user device with minimal human involvement by determining appropriate actions to be performed to update a local operating state based on an outcome of an automated data exchange session between multiple agents executing across different user devices. Therefore, the described techniques can reduce the power consumption of both an input device and a display device of the user device and hence preserves battery life of the user device, because a user needs to enter no or only very few inputs by using the input device during the automated data exchange session. Likewise, the display device need not remain active for a prolonged period of time while the user is entering the inputs.

Moreover, by automating the process of how the local operating states can be updated, the described techniques can enhance user experience with the user device because the local operating states can be updated more quickly and more responsively to changes in the surrounding environment than they would if they were updated manually.

The details of one or more embodiments of the subject matter of this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 is a diagram of an example environment.
FIG. 2 is a flow diagram of an example process for updating a local operating state of a first user device.
FIG. 3 is an example illustration of updating a local operating state of a first user device based on performing an automated data exchange session between two agents.
FIG. 4 is another example illustration of updating a local operating state of a first user device based on performing an automated data exchange session between two agents.
FIG. 5 is another example illustration of updating a local operating state of a first user device based on performing an automated data exchange session between two agents.

Like reference numbers and designations in the various drawings indicate like elements.

### DETAILED DESCRIPTION

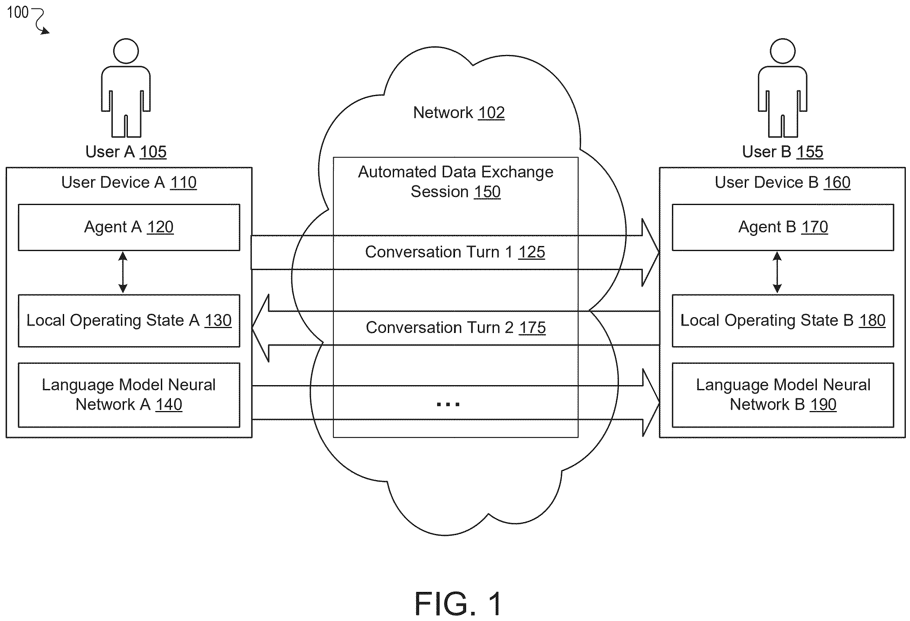

FIG. 1 is a diagram of an example environment 100. The example environment 100 includes a network 102, such as a local area network (LAN), a wide area network (WAN), the Internet, or a combination thereof. The network 102 connects a plurality of user devices. Example user devices include desktop computers, laptop computers, tablet computers, wearable computers, cellular phones, smart phones, gaming devices, mobile communication devices, digital assistant devices, augmented reality devices, virtual reality devices, and other electronic devices that can send and receive data over the network 102.

Although FIG. 1 only illustrates two user devices, i.e., user device A 110 and user device B 160, in other examples, the network 102 can connect a greater number of user devices, e.g., three, four, or more user devices, and description about the user device A 110 and the user device B 160 can apply equally to each of pair of user devices that may be connected by the network 102.

Each user device has a respective local operating state. For example, in FIG. 1, the user device A 110 has the local operating state A 130 and the user device B 160 has the local operating state B 180. The local operating state of a user device refers to a combination of the current statuses of one or more capabilities of the user device. The capabilities can include an audio capability, a display capability, a processing capability, and so on.

The current status of an audio capability of a user device can be indicative of, for example, the type, quality, clarity, quantity, volume level, privacy level (e.g., headphone, speaker), or the like, of the audio output device (and/or associated software) of the user device. Additionally, or alternatively, the current status of the audio capability of the user device can be indicative of the audio content to be played by the audio output device of the user device.

The current status of a display capability of a user device can be indicative of, for example, the brightness, contrast, type, quality, clarity, resolution, sharpness, quantity, privacy level (e.g., screen size, ability to conceal from others), or the like, of the display device (and/or associated software) of the user device. Additionally, or alternatively, the current status of the display capability of the user device can be indicative of the visual content to be presented by the display device of the user device.

The current status of a processing capability of a user device can indicate whether the user device is in an active status (e.g., currently processing, downloading, uploading) or whether the user device is in a passive status (e.g., airplane mode, sleep mode, silence mode, locked-screen mode). Additionally, or alternatively, the current status of the processing capability of the user device can indicate whether the user device is in an interactive mode (e.g., a user is interacting with the user device) or whether the user device is in an ambient mode (e.g., after a time-out period during which no user input is received by the user device). Additionally, or alternatively, the current status of the processing capability of the user device can indicate whether the user device is in a power savings mode (where at least a portion of the capabilities of the user device is temporarily powered down to save energy) or a regular operating mode. Additionally, or alternatively, the current status of the processing capability of the user device can indicate whether the user device is powered on or off. Additionally, or alternatively, the current status of the processing capability of the user device can indicate a runtime behavior or functionality of a software application installed on the user device. Analogously, the current status of the processing capability of the user device can indicate data values of the data associated with the software application installed on the user device.

A user device typically includes software applications that are installed and executed on the user device to facilitate the sending and receiving of data over the network 102 and other functionalities of the user device. Example software applications include a calendar application, a browser application, an email application, a text message application, a word processing application, and so on.

In particular, such software applications include an agent application, which may be referred to as an "agent," an "automated assistant," a "digital agent," an "interactive personal assistant," an "intelligent personal assistant," an "assistant application," a "conversational agent," etc.

An agent that is included in a user device is specific to the user device, a user of the user device, or both. An agent can be utilized by the user, e.g., on the user device, to perform one or more tasks on their behalf. Some agents can engage in human-to-computer and/or computer-to-computer dialogs.

For example, in FIG. 1, the user device A 110 has the agent A 120 and the user device B 160 has the agent B 170. The user A 105 of the user device A 110 can utilize the agent A 120 to perform one or more tasks on their behalf. Likewise, the user B 155 of the user device B 160 can utilize the agent B 170 to perform one or more tasks on their behalf.

Example tasks include automated assistance tasks to be performed within a suitable execution environment, e.g., a runtime environment or an operating system environment, through interactions with various local, remote, and/or third-party software applications, websites, or other agents.

Examples of the automated assistance tasks include completing a form on a website, scheduling an appointment through a calendar application, making a phone call through a telephone application, sending an email to a recipient through an e-mail application, sending an instant message through an instant messaging application, booking a flight reservation to a destination and/or a hotel reservation at the destination through a travel application, and so on.

To automatically perform these tasks on behalf of the user, the agent utilizes one or more generative neural networks, among other machine learning models. The generative neural network can have any appropriate neural network architecture that allows the neural network to map an input sequence of tokens from a vocabulary to an output sequence of tokens from the vocabulary.

The vocabulary of tokens can include any of a variety of tokens that represent text symbols or other symbols. For example, the vocabulary of text tokens can include one or more of characters, sub-words, words, punctuation marks, numbers, or other symbols that appear in a corpus of text in a natural language and/or a computer programming language.

For example, the generative neural network can have a Transformer-based neural network architecture or a recurrent neural network-based architecture. As a particular example, the generative neural network can be an auto-regressive Transformer-based neural network that has, e.g., an encoder-only Transformer architecture, an encoder-decoder Transformer architecture, or a decoder-only Transformer architecture.

Examples of such architectures include those described in Colin Raffel, Noam Shazeer, Adam Roberts, Katherine Lee, Sharan Narang, Michael Matena, Yanqi Zhou, Wei Li, and Peter J Liu. Exploring the limits of transfer learning with a unified text-to-text transformer. arXiv preprint arXiv:1910.10683, 2019; Daniel Adiwardana, Minh-Thang Luong, David R. So, Jamie Hall, Noah Fiedel, Romal Thoppilan, Zi Yang, Apoorv Kulshreshtha, Gaurav Nemade, Yifeng Lu, and Quoc V. Le. Towards a human-like open-domain chatbot. CoRR, abs/2001.09977, 2020; Tom B Brown, Benjamin Mann, Nick Ryder, Melanie Subbiah, Jared Kaplan, Prafulla Dhariwal, Arvind Neelakantan, Pranav Shyam, Girish Sastry, and Amanda Askell, et al. Language models are few-shot learners. arXiv preprint arXiv:2005.14165, 2020; Aakanksha Chowdhery, et al. PaLM: Scaling Language Modeling with Pathways, arXiv preprint arXiv:2204.02311; and Rohan Anil, et al. Palm 2 technical report. arXiv preprint arXiv:2305.10403, 2023.

The example environment 100 thus also includes one or more generative neural networks. In some implementations, each user device has a distinct generative neural network. For example, as illustrated in FIG. 1, the user device A 110 implements a generative neural network A 140, and the user device B 160 implements a generative neural network B 190.

However, this is not required. In other implementations, two or more of the user devices can share at least some components of a generative neural network. For example, the generative neural network can be stored and implemented on one of the user devices, or can alternatively be implemented within a data center that is remote from either user device.

As another example, two or more of the user devices can share some components of a generative neural network, while each maintaining some other components of the generative neural network. For example, the data center can store a set of base parameters of generative neural network that is shared across the user devices, while each user device can store a set of user-specific parameters of generative neural network having values that vary from one user device to another.

Each agent has access to the respective local operating state of the user device. For example, in FIG. 1, the agent A 120 that executes on the user device A 110 has access to the local operating state A 130 of the user device A 110, and the agent B 170 that executes on the user device B 160 has access to the local operating state B 180 of the user device B 160.

As mentioned above, the local operating state of the user device refers to a combination of the current statuses of one or more capabilities, e.g., an audio capability, a display capability, a processing capability, and so on, of the user device. Thus, for example, in FIG. 1, the agent A 120 can have access to the volume level of the audio output device of the user device A 110; the agent A 120 can have access to the brightness level of the display device of the user device A 110; the agent A 120 can have access to the runtime behavior or functionality of a software application installed on the user device of the user device A 110; the agent A 120 can further have access to the data values of the data associated with the software application installed on the user device., e.g., data pertaining to a calendar meeting with one or more other users, data pertaining to a dining reservation at a restaurant, data pertaining to a local version of a shared document, etc.

Each agent can determine one or more actions that, once performed by the user device, will update (or modify) the local operating state of the user device. For example, in FIG. 1, the agent A 120 can update the local operating state A 130 of the user device A 110, and the agent B 170 can update the local operating state B 180 of the user device B 160. For example, the agent A 120 can adjust the volume level of the audio output device of the user device A 110; the agent A 120 can adjust the brightness level of the display device of the user device A 110; the agent A 120 can further modify the runtime behavior or functionality of the software application installed on the user device of the user device A 110, e.g., modify a calendar meeting with one or more other users, modify a dining reservation at a restaurant, update a local version of a shared document, etc.

To update the local operating state of the user device, the agent that executes on the user device performs an automated data exchange session that is established over the network 102 between another agent that executes on another user device. For example, in FIG. 1, the agent A 120 that executes on the user device A 110 can perform an automated data exchange session 150 with the agent B that executes on the user device B 160.

The automated data exchange session can be in the form of a multi-turn dialog including one or more conversation turns. Hence an automated data exchange session may also be referred as an "automated data communication session," a "computerized data exchange session," or an "automated conversation session."

Each conversation turn includes text in some natural language that is generated by utilizing the one or more generative neural networks. For example, in FIG. 1, the automated data exchange session 150 includes a first conversation turn 125 that is from the agent A 120 to the agent B 170 and that is generated by using the generative neural network A 140, and a second conversation turn 175 that is from the agent B 170 to the agent A 120 and that is generated by using the generative neural network B 190. In other examples, an automated data exchange session can include one or more conversation turns that are generated by using the same generative neural network.

Users of the user devices may be provided with an opportunity to enable/disable or control the functionalities on the user devices that may relate to such automated data exchange sessions and/or performing actions based on the automated data exchange sessions, such that no automated data exchange sessions and corresponding actions will be performed without user permission.

In situations where users of the user devices have enabled the functionalities that relate to automated data exchange sessions, such an automated data exchange session can be established in response to a triggering signal.

An example of the triggering signal is the detection by a user device that the user device has entered a predetermined location (e.g., a room, a building, a city block, a transportation tool (e.g., a plane, a bus, or a ship), etc.).

Another example of the triggering signal is the detection by a user device that another user device is present within a certain proximity (e.g., within a same building complex, within a certain number of feet, etc.).

Another example of the triggering signal is the detection by a user device of a stimulus event that takes place in the physical environment (e.g., a motion event, an audio event, etc.). For example, the user device can use the microphone or another audio input device to identify a wake-up word or other keyword to trigger an automated data exchange session with another user device.

In any example, an automated data exchange session will only be established between two user devices the respective users of which have enabled the functionalities that relate to automated data exchange sessions. Further, the usage of triggering signal reduces battery usage because this allows the relevant functionalities to remain inactive, e.g., in a quiescent mode, prior to the triggering signal.

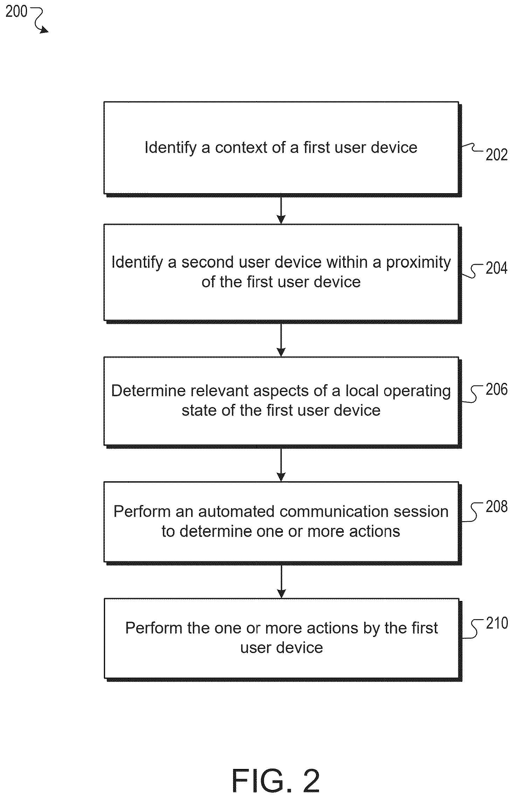

FIG. 2 is a flow diagram of an example process 200 for updating a local operating state of a first user device. For convenience, the process 200 will be described as being performed by a first user device that includes one or more computers. For example, the user device A 110 of FIG. 1, appropriately programmed in accordance with this specification, can perform the process 200.

The first user device identifies a context of the first user device (step 202). The context of the first user device can include a temporal context, a geographic context, a processing context, or some combination of these, in which the first user device is situated.

Temporal context can include, for example, historic events that happened close in time to the current time point, e.g., within a threshold amount of time before the current time point. For example, the historic events can include a sound event, e.g., a sound captured by a microphone of the first user device. As another example, the historic events can include a visual event, e.g., a visual content, e.g., an image or a video, captured by a camera of the first user device. As another example, the historic events can include a user input event that is triggered by an input entered by a user using an input device of the first user device., e.g., a keyboard, a mouse, a touchscreen, a button, and the like. Examples of user input events include a button press event, a button release event, a screen change event, a touch press event, a touch release event, a data entry or data change event, and the like.

Geographic context can include, for example, environmental properties associated with a spatial environment that is proximate in distance to the location of the first user device, e.g., a spatial environment surrounding the first user device. For example, the environmental properties can include a noise level, a temperature, an ambient light level, a humidity level, and the like.

When the context of the first user device includes geographical context, step 202 involves localizing the first user device, i.e., determining the location of the first user device. The localization of a user device can be performed in many different ways, which potentially differ in power usage and/or accuracy.

Examples of localization techniques include, for example, inertial positioning, such as dead reckoning, using physics models based on gait/stride heuristics and other data, inertial odometry, and the like. Other examples of localization techniques include radio localization, for example using Bluetooth, ultra-wideband (UWB) radio, millimeter-wave (mmWave) radar, WiFi, Indoor Positioning, near field communication (NFC), and the like. Further, satellite radio (e.g., Global Positioning Satellite ("GPS")) and cellular-base localization can be used (e.g., 4G or 5G positioning). Further, in some implementations, available localization techniques include visual technologies, such as visual localization, visual-inertial odometry ("VIO"), simultaneous localization and mapping ("SLAM"), and the like.

Processing context can include, for example, the software applications that are installed and executed on the first user device and their operational state information, e.g., information about a particular software application that is executing in an operating system of the first user device, information about particular functionalities of the particular software application that are being used, and the like.

The first user device identifies a second user device within a proximity of the first user device (step 204), e.g., within a threshold distance of the location of the first user device. That is, the first user device and the second user device are physically collocated. For example, the second user device can be the user device B 160 of FIG. 1.

Step 204 involves localizing the second user device, i.e., determining the location of the second user device, which can be performed in any of the example ways mentioned above and possibly other ways.

The first user device determines relevant aspects of a local operating state of the first user device that are relevant to the context (step 206). As previously mentioned, the local operating state of the first user device refers to a combination of the current statuses of one or more capabilities of the first user device. The capabilities can include an audio capability, a display capability, a processing capability, and so on.

The ways in which step 206 is performed can vary from implementation to implementation. In some implementations, the relevant aspects of the local operating state can be determined based on a user input from a user of the first user device. For example, the first user device can present all aspects of the local operating state as a list of selectable options to a user on a display device of the first user device, e.g., through a user interface of a first agent that is executing on the first user device, and use the aspects that are selected by the user as the relevant aspects.

In some implementations, the relevant aspects of the local operating state can be determined automatically by the first user device. For example, the first user device can maintain a mapping between different contexts and corresponding aspects of the local operating state, e.g., a mapping that maps the temporal context to aspects of the audio capability of the first user device, a mapping that maps the geographic context to aspects of the audio and/or display capabilities of the first user device, a mapping that maps the processing context to aspects of the processing capability of the first user device, and the like. Thus, depending on the context that has been identified in step 202, at step 206, the first user device can determine the relevant aspects of the local operating state that map to the identified context.

As another example, the first user device can utilize a generative neural network to determine the relevant aspects of the local operating state of the first user device that are relevant to the context. For example, the first user device can generate a prompt that includes data characterizing the identified context of the first user device, and cause the generative neural network to process the prompt to generate an output that defines which aspects of the local operating state of the first user device are relevant to the identified context.

The first user device performs an automated data exchange session between a first agent executing on the first user device and a second agent executing on the second user device (step 208). The automated data exchange session can be a multi-turn dialog including one or more conversation turns. Each conversation turn includes text in some natural language that is generated by utilizing the same or different generative neural networks.

In some implementations, at least one of the conversation turns is generated by using a generative neural network to process a prompt that includes data derived from the relevant aspects of the local operating state of the first user device. In some implementations, at least one of the conversation turns is generated by using a generative neural network to process a prompt that includes data derived from the relevant aspects of the local operating state of the second user device.

The automated data exchange session can terminate when an outcome of the session satisfies one or more metrics for determining one or more actions that each define an update to the local operating state of the first user device.

For example, the one or more metrics can include a metric that specifies whether a conversation turn from the first user device to the second user device includes text that describes what actions can be performed by the first user device in view of the identified context. As another example, the one or more metrics can include a metric that specifies whether an agreement has been reached between the first and second user devices on what actions can be performed by the first user device in view of the identified context.

The first agent executing on the first user device causes the first user device to perform the one or more actions to update the local operating state of the first user device (step 210). In this manner, the first user device updates its local operating state based on the outcome of the automated data exchange session.

As previously mentioned at least some aspects of the local operating state can relate to the hardware capabilities of the first user device, and therefore the actions can include actions to modify the hardware settings of the first user device. Examples of the hardware settings include speaker volume settings, microphone device settings, audio balance settings, display brightness settings, display contrast settings, Bluetooth device settings, WiFi device settings, infrared device settings, camera device settings, and so forth.

In some implementations, the one or more actions can be performed automatically, such that the local operating state of the first user device is updated without user involvement. In some of these implementations, after having updated the local operating state, the first user device can present a summary of the one or more automatically performed actions to the user on the display device, e.g., through the user interface of the first agent that is executing on the first user device. Optionally, the first agent can provide the user with an option to revert back some of the one or more automatically performed actions, such that the previous local operating state of the first user device can be (partially) restored.

In some other implementations, the one or more actions are subject to user confirmation. For example, the first user device can present the one or more actions to the user on the display device of the first user device, e.g., through the user interface of the first agent that is executing on the first user device, for confirmation and/or selection. If an action is confirmed and/or selected, then the first user device performs the selected action to update its local operating state.

A few examples of how iterations of the process 200 can be performed to update the local operating state of the first user device will now be described.

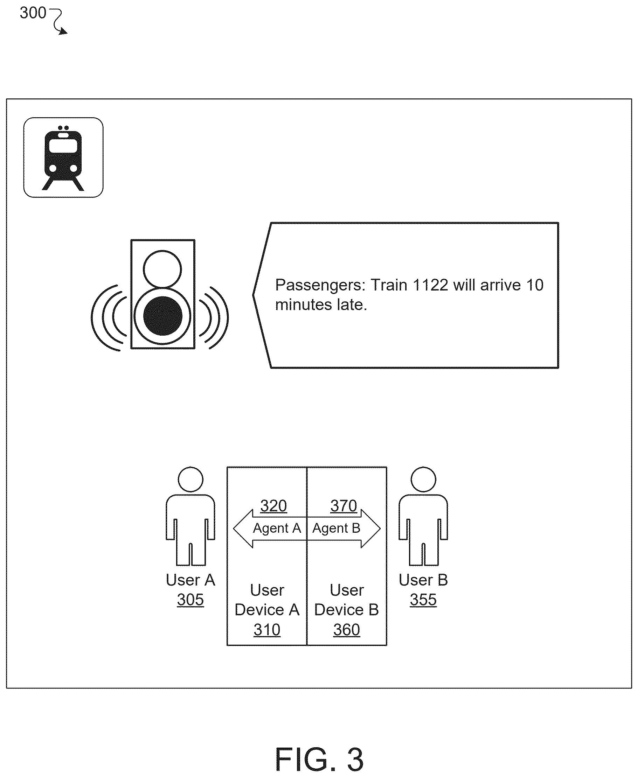

FIG. 3 is an example illustration 300 of updating a local operating state of a first user device based on performing an automated data exchange session between two agents. As illustrated, user A 305 has a user device A 310 on which an agent A 320 is executed, and user B 355 has a user device B 360 on which an agent B 370 is executed. For example, the first user device can correspond to the user device A 310 of the user A 305.

In the example of FIG. 3, the context identified by the user device A 310 is a temporal context. The temporal context includes a sound event that happened close in time to the current time point. The sound event includes a sound (a public announcement of "passengers: train 1122 will arrive 10 minutes late.") that is captured by a microphone of the user device A 310.

After the public announcement, user B 355 who is carrying the user device B 360 arrives at the same waiting area for trains as user A 305, and hence the user device B 360 moves close to the user device A 310. Correspondingly, the user device A 310 identifies the user device B 360 within a proximity of the user device A 310. Because user B 355 arrived after the public announcement, user B 355 has missed the public announcement.

The agent A 320 determines that aspects of the local operating state of the user device A 310 that are relevant to the context in which the user device A 310 is situated include aspects of the processing capability of the user device A 310. For example, the processing capability can include a functionality of a software application (the agent A 320) installed on the user device A 310.

The user device A 310 performs an automated data exchange session between the agent A 320 that executes on the user device A 310 and the agent B 370 that executes on the user device B 360.

For example, the automated data exchange session can include a first conversation turn from the agent A 320 to the agent B 370: "Are you waiting to board train 1122?" The agent A 320 can generate the first conversation turn by using a generative neural network to process a prompt that includes data generated based on the relevant aspects of the processing capability of the user device A 310. For example, the prompt can be: "You are an automated assistant for a user who is inside a waiting area for trains together with another user who arrived after there was an announcement that train 1122 will arrive 10 minutes late. What can you do for the other user?"

The automated data exchange session can include a second conversation turn from the agent B 370 to the agent A 320: "Yes, I am." The agent B 370 can generate the second conversation turn by using a generative neural network (which can be either the same as or different than the generative neural network used by agent A 320) to process a prompt that includes the first conversation turn and, optionally, data derived from the relevant aspects of the local operating state of the user device B 360.

The user device B 360 can likewise determine that aspects of the local operating state of the user device B 360 that are relevant to the context in which the user device B 360 is situated include aspects of the processing capability of the user device B 360. For example, the processing capability includes data associated with a software application (train ticket data stored in a commuting application) installed on the user device B 360.

The automated data exchange session can include a third conversation turn from the agent A 320 to the agent B 370: "Ok. You just missed an announcement that train 1122 is going to be 10 minutes late." The agent A 320 can generate the third conversation turn by using the generative neural network to process a prompt that includes the first and second conversation turns and, optionally, the data generated based on the relevant aspects of the processing capability of the user device A 310.

The third conversation turn thus defines an action of forwarding, by the agent A 320 that executes on the user device A 310, the text transcription of the public announcement from the user device A 310 to the agent B 370 that executes on the user device B 360.

Performing such an action by the user device A 310 updates the local operating state of the user device A 310, i.e., updates the runtime behavior of the agent A 320 that executes on the user device A 310. In some implementations, without the public announcement, the agent A 320 might otherwise be in a background or inactive state (e.g., because the user may not have interacted with the agent A 320 within a predetermined time) and corresponding would have performed no actions.

In some implementations, the action defined by the third conversation turn further triggers an action of displaying, by the agent B 370 (or another software application) that executes on the user device B 360, a notification (e.g., a visual notification, an audio notification, or a vibrational notification) to user B 355 about the public announcement that has been forwarded from the user device A 310 360. Performing the public announcement forwarding action by the user device A 310 thus further updates the local operating state of the user device B 360, i.e., updates the runtime behavior of the agent B 370 (or the other software application) that executes on the user device B 360.

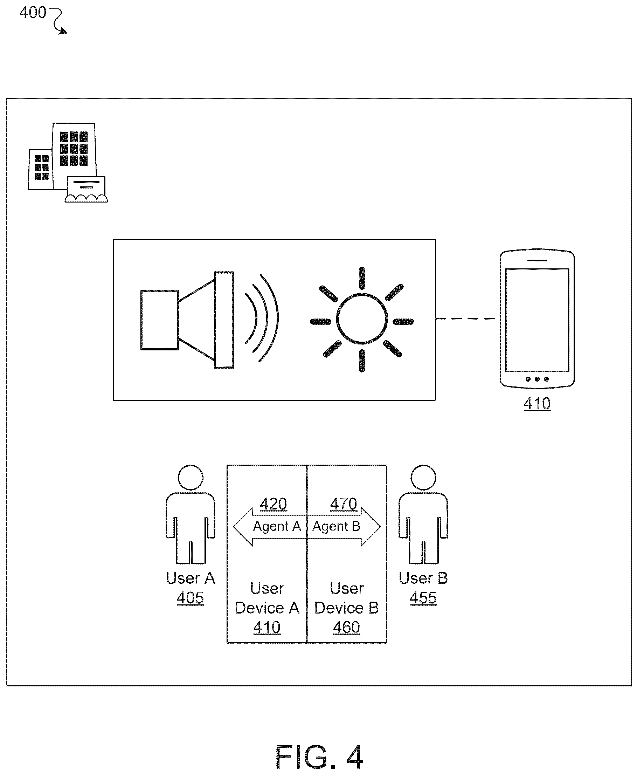

FIG. 4 is an example illustration 400 of updating a local operating state of a first user device based on performing an automated data exchange session between two agents. As illustrated, user A 405 has a user device A 410 on which an agent A 420 is executed, and user B 455 has a user device B 460 on which an agent B 470 is executed. For example, the first user device can correspond to the user device A 410 of the user A 405.

In the example of FIG. 4, the context identified by the user device A 410 is a geographic context. For example, because the spatial environment surrounding the user device A 410 is a classroom, a cinema, a meeting room, or another gathering place, the environmental properties associated with the spatial environment can indicate a relatively low noise level and a relatively brightness level.

The user device A 410 identifies the user device B 460 within a proximity of the user device A 410, e.g., as user B 455 who is carrying the user device B 460 enters the same spatial environment, e.g., the same classroom, the same cinema, or the same meeting room, as user A 405 and hence moves proximate to the user device A 410.

The user device A 410 determines that aspects of the local operating state of the user device A 410 that are relevant to the context in which the user device A 410 is situated include aspects of the audio capability and the display capability of the user device A 410. For example, the agent A 420 determines that the audio output device of the user device A 410 is set to a high volume level, and that the display device of the user device A 410 is set to a high brightness level.

The user device A 410 performs an automated data exchange session between the agent A 420 that executes on the user device A 410 and the agent B 470 that executes on the user device B 460.

For example, the automated data exchange session can include a first conversation turn from the agent A 420 to the agent B 470: "What do your settings for the audio output device and the display device look like? My audio output device is set to a high volume level. And my display device is set to a high brightness level." The agent A 420 can generate the first conversation turn by using a generative neural network to process a prompt that includes data generated based on the relevant aspects of the audio capability and the display capability of the user device A 410.

The automated data exchange session can include a second conversation turn from the agent B 470 to the agent A 420: "My audio output device is set to a low volume level. And my display device is set to a low brightness level. We are in a gathering place that is dark and quiet. Maybe you need to change your settings accordingly." The agent B 470 can generate the second conversation turn by using a generative neural network (which can be either the same as or different than the generative neural network used by agent A 420) to process a prompt that includes the first conversation turn and, optionally, data derived from the relevant aspects of the local operating state of the user device B 460.

The user device B 460 can likewise determine that aspects of the local operating state of the user device B 460 that are relevant to the context in which the user device B 460 is situated include aspects of the audio capability and the display capability of the user device B 460.

The automated data exchange session can include a third conversation turn from the agent A 420 to the agent B 470: "You are right. I need to lower the volume level of the audio output device and the brightness level of the display device." The agent A 420 can generate the third conversation turn by using the generative neural network to process a prompt that includes the first and second conversation turns and, optionally, the data generated based on the relevant aspects of the audio capability and the display capability of the user device A 410.

The third conversation turn defines an action to adjust the audio output device of the user device A 410 to a low volume level. The third conversation turn also defines an action to adjust the display device of the user device A 410 to a low brightness level. Performing these actions by the user device A 410 updates the local operating state of the user device A 410, i.e., updates the current statuses of the audio and display capabilities of the user device A 410. Performing these actions also reduces power consumption and extends battery life of the user device A 410.

To this end, the agent A 420 that executes on the user device A 410 can utilize the generative neural network to generate one or more outputs that include calls to hardware settings control signal logic which, when executed by the hardware settings control signal logic, cause the hardware settings of the user device A 410 to be changed. For example, the generative neural network can generate such calls by way of generating parameters of a function call or a call to an application programming interface or interprocess communication mechanism.

In practice, the user device A 410 can include hardware settings control signal logic that is configured to generate control signals to control the hardware settings of the user device A 410 in accordance with the calls generated by the agent A 420. For example, the hardware settings control signal logic can generate a control signal to change the volume settings of an audio output device. As another example, the hardware settings control signal logic can generate a control signal to change the brightness settings of a display device.

In a similar example, the user device A 410 can have connected to a Wi-Fi that is available in the spatial environment and then, after the user device B 460 is identified, the user device A 410 determines that aspects of the local operating state of the user device A 410 that are relevant to the context include Wi-Fi connectivity status of the user device B 460. Correspondingly, the user device B 460 can perform an automated data exchange session between the agent B 470 and the agent A 420 to determine that the user device B 460 should turn on Wi-Fi, and connect the Wi-Fi network to which the user device A 410 is connected.

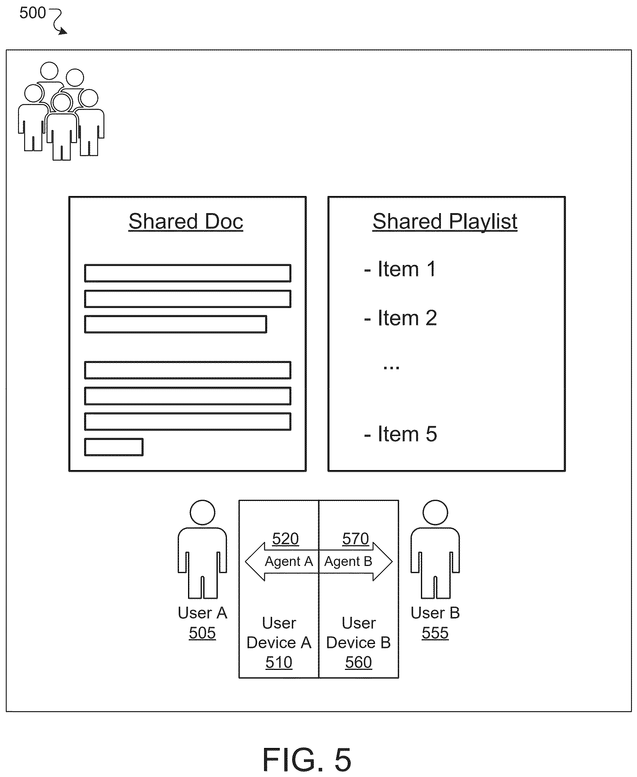

FIG. 5 is an example illustration 500 of updating a local operating state of a first user device based on performing an automated data exchange session between two agents. As illustrated, user A 505 has a user device A 510 on which an agent A 520 is executed, and user B 555 has a user device B 560 on which an agent B 570 is executed. For example, the first user device can correspond to the user device A 510 of the user A 505.

In the example of FIG. 5, the context identified by the user device A 510 is a processing context. For example, the processing context includes information about a music application that is executing in an operating system of the user device A 510 and information about the functionality of the music application to create shared playlists together with other users.

The user device A 510 identifies the user device B 560 within a proximity of the user device A 510, e.g., as user B 555 who is carrying the user device B 560 moves proximate to the user device A 510.

The user device A 510 determines that aspects of the local operating state of the user device A 510 that are relevant to the context in which the user device A 510 is situated include aspects of the processing capability of the user device A 510. For example, the processing capability can include a runtime behavior or functionality of the music application installed on the user device A 510. As another example, the processing capability can include data values of the data associated with the music application installed on the user device A 510.

The user device A 510 performs an automated data exchange session between the agent A 520 that executes on the user device A 510 and the agent B 570 that executes on the user device B 560.

For example, the automated data exchange session can include a first conversation turn from the agent A 520 to the agent B 570: "Let's create a shared playlist. I have the following items that are saved as favorite items on my device: item 1, item 2, item 3. What about you?" The agent A 520 can generate the first conversation turn by using a generative neural network to process a prompt that includes data generated based on the relevant aspects of the processing capability of the user device A 510. For example, the data can include the name of the music application and the names of the items that are saved as favorite items in the music application.

The automated data exchange session can include a second conversation turn from the agent B 570 to the agent A 520: "I have the following items that are saved as favorite items on my device: item 1, item 4, item 5." The agent B 570 can generate the second conversation turn by using a generative neural network (which can be either the same as or different than the generative neural network used by agent A 520) to process a prompt that includes the first conversation turn and, optionally, data derived from the relevant aspects of the local operating state of the user device B 560.

The user device B 560 can likewise determine that aspects of the local operating state of the user device B 560 that are relevant to the context in which the user device B 560 is situated include aspects of the processing capability of the user device B 560. For example, the processing capability can include a runtime behavior or functionality of the music application installed on the user device B 560. As another example, the processing capability can include data values of the data associated with the music application installed on the user device B 560.

The automated data exchange session can include a third conversation turn from the agent A 520 to the agent B 570: "Ok. I have item 1, too. But I will add item 4 and item 5 to the shared playlist that we are creating. Take a look at the shared playlist at here." The agent A 520 can generate the third conversation turn by using the generative neural network to process a prompt that includes the first and second conversation turns and, optionally, the data generated based on the relevant aspects of the processing capability of the user device A 510.

The third conversation turn defines an action to create a shared playlist in the music application that is executing on the user device A 510, where the shared playlist includes item 1, item 2, item 3, item 4, and item 5. The third conversation turn also defines an action to display the shared playlist as visual content on the display device of the user device A 510. Performing these actions by the user device A 510 updates the local operating state of the user device A 510, i.e., updates the runtime behavior of the music application that executes on the user device A 510 and updates the current status of the display capability of the user device A 510.

In an analogous example, an iteration of the process 200 can be performed to similarly update the runtime behavior of a document processing application that executes on the user device A 510 and update the current status of the display capability of the user device A 510. For example, an outcome of the automated data exchange session can define an action to create and display a shared document, where the shared document includes a portion that is generated by the user A 505 on the user device A 510 and another portion that is generated by the user B 555 on the user device B 560.

For situations in which the systems discussed here collect and/or use personal information about user, including location information about user devices, the users may be provided with an opportunity to enable/disable or control the programs or features that may collect and/or use personal information (e.g., information about a user's social network, social actions or activities, a user's preferences, or a user's current location). In addition, certain data may be treated in one or more ways before it is stored or used, so that personally identifiable information associated with the user is removed. For example, a user's identity may be anonymized so that the no personally identifiable information can be determined for the user, or a user's geographic location may be generalized where location information is obtained (such as to a city, ZIP code, or state level), so that a particular location of a user cannot be determined.

In this specification, the term "configured" is used in relation to computing systems and environments, as well as computer program components. A computing system or environment is considered "configured" to perform specific operations or actions when it possesses the necessary software, firmware, hardware, or a combination thereof, enabling it to carry out those operations or actions during operation. For instance, configuring a system might involve installing a software library with specific algorithms, updating firmware with new instructions for handling data, or adding a hardware component for enhanced processing capabilities. Similarly, one or more computer programs are "configured" to perform particular operations or actions when they contain instructions that, upon execution by a computing device or hardware, cause the device to perform those intended operations or actions.

The embodiments and functional operations described in this specification can be implemented in various forms, including digital electronic circuitry, software, firmware, computer hardware (encompassing the disclosed structures and their structural equivalents), or any combination thereof. The subject matter can be realized as one or more computer programs, essentially modules of computer program instructions encoded on a tangible non-transitory storage medium for execution by or to control the operation of a computing device or hardware. The storage medium can be a storage device such as a hard drive or solid-state drive (SSD), a storage medium, a random or serial access memory device, or a combination of these. Additionally or alternatively, the program instructions can be encoded on a transmitted signal, such as a machine-generated electrical, optical, or electromagnetic signal, designed to carry information for transmission to a receiving device or system for execution by a computing device or hardware. Furthermore, implementations may leverage emerging technologies like quantum computing or neuromorphic computing for specific applications, and may be deployed in distributed or cloud-based environments where components reside on different machines or within a cloud infrastructure.

The term "computing device or hardware" refers to the physical components involved in data processing and encompasses all types of devices and machines used for this purpose. Examples include processors or processing units, computers, multiple processors or computers working together, graphics processing units (GPUs), tensor processing units (TPUs), and specialized processing hardware such as field-programmable gate arrays (FPGAs) or application-specific integrated circuits (ASICs). In addition to hardware, a computing device or hardware may also include code that creates an execution environment for computer programs. This code can take the form of processor firmware, a protocol stack, a database management system, an operating system, or a combination of these elements. Embodiments may particularly benefit from utilizing the parallel processing capabilities of GPUs, in a General-Purpose computing on Graphics Processing Units (GPGPU) context, where code specifically designed for GPU execution, often called kernels or shaders, is employed. Similarly, TPUs excel at running optimized tensor operations crucial for many machine learning algorithms. By leveraging these accelerators and their specialized programming models, the system can achieve significant speedups and efficiency gains for tasks involving artificial intelligence and machine learning, particularly in areas such as computer vision, natural language processing, and robotics.

A computer program, also referred to as software, an application, a module, a script, code, or simply a program, can be written in any programming language, including compiled or interpreted languages, and declarative or procedural languages. It can be deployed in various forms, such as a standalone program, a module, a component, a subroutine, or any other unit suitable for use within a computing environment. A program may or may not correspond to a single file in a file system and can be stored in various ways. This includes being embedded within a file containing other programs or data (e.g., scripts within a markup language document), residing in a dedicated file, or distributed across multiple coordinated files (e.g., files storing modules, subprograms, or code segments). A computer program can be executed on a single computer or across multiple computers, whether located at a single site or distributed across multiple sites and interconnected through a data communication network. The specific implementation of the computer programs may involve a combination of traditional programming languages and specialized languages or libraries designed for GPGPU programming or TPU utilization, depending on the chosen hardware platform and desired performance characteristics.

In this specification, the term "engine" broadly refers to a software-based system, subsystem, or process designed to perform one or more specific functions. An engine is typically implemented as one or more software modules or components installed on one or more computers, which can be located at a single site or distributed across multiple locations. In some instances, one or more dedicated computers may be used for a particular engine, while in other cases, multiple engines may operate concurrently on the same one or more computers. Examples of engine functions within the context of AI and machine learning could include data preprocessing and cleaning, feature engineering and extraction, model training and optimization, inference and prediction generation, and post-processing of results. The specific design and implementation of engines will depend on the overall architecture and the distribution of computational tasks across various hardware components, including CPUs, GPUs, TPUs, and other specialized processors.

The processes and logic flows described in this specification can be executed by one or more programmable computers running one or more computer programs to perform functions by operating on input data and generating output. Additionally, graphics processing units (GPUs) and tensor processing units (TPUs) can be utilized to enable concurrent execution of aspects of these processes and logic flows, significantly accelerating performance. This approach offers significant advantages for computationally intensive tasks often found in AI and machine learning applications, such as matrix multiplications, convolutions, and other operations that exhibit a high degree of parallelism. By leveraging the parallel processing capabilities of GPUs and TPUs, significant speedups and efficiency gains compared to relying solely on CPUs can be achieved. Alternatively or in combination with programmable computers and specialized processors, these processes and logic flows can also be implemented using specialized processing hardware, such as field-programmable gate arrays (FPGAs) or application-specific integrated circuits (ASICs), for even greater performance or energy efficiency in specific use cases.

Computers capable of executing a computer program can be based on general-purpose microprocessors, special-purpose microprocessors, or a combination of both. They can also utilize any other type of central processing unit (CPU). Additionally, graphics processing units (GPUs), tensor processing units (TPUs), and other machine learning accelerators can be employed to enhance performance, particularly for tasks involving artificial intelligence and machine learning. These accelerators often work in conjunction with CPUs, handling specialized computations while the CPU manages overall system operations and other tasks. Typically, a CPU receives instructions and data from read-only memory (ROM), random access memory (RAM), or both. The elements of a computer include a CPU for executing instructions and one or more memory devices for storing instructions and data. The specific configuration of processing units and memory will depend on factors like the complexity of the AI model, the volume of data being processed, and the desired performance and latency requirements. Embodiments can be implemented on a wide range of computing platforms, from small embedded devices with limited resources to large-scale data center systems with high-performance computing capabilities. The system may include storage devices like hard drives, SSDs, or flash memory for persistent data storage.

Computer-readable media suitable for storing computer program instructions and data encompass all forms of non-volatile memory, media, and memory devices. Examples include semiconductor memory devices such as read-only memory (ROM), solid-state drives (SSDs), and flash memory devices; hard disk drives (HDDs); optical media; and optical discs such as CDs, DVDs, and Blu-ray discs. The specific type of computer-readable media used will depend on factors such as the size of the data, access speed requirements, cost considerations, and the desired level of portability or permanence.

To facilitate user interaction, embodiments of the subject matter described in this specification can be implemented on a computing device equipped with a display device, such as a liquid crystal display (LCD) or an organic light-emitting diode (OLED) display, for presenting information to the user. Input can be provided by the user through various means, including a keyboard), touchscreens, voice commands, gesture recognition, or other input modalities depending on the specific device and application. Additional input methods can include acoustic, speech, or tactile input, while feedback to the user can take the form of visual, auditory, or tactile feedback. Furthermore, computers can interact with users by exchanging documents with a user's device or application. This can involve sending web content or data in response to requests or sending and receiving text messages or other forms of messages through mobile devices or messaging platforms. The selection of input and output modalities will depend on the specific application and the desired form of user interaction.

Machine learning models can be implemented and deployed using machine learning frameworks, such as TensorFlow or JAX. These frameworks offer comprehensive tools and libraries that facilitate the development, training, and deployment of machine learning models.

Embodiments of the subject matter described in this specification can be implemented within a computing system comprising one or more components, depending on the specific application and requirements. These may include a back-end component, such as a back-end server or cloud-based infrastructure; an optional middleware component, such as a middleware server or application programming interface (API), to facilitate communication and data exchange; and a front-end component, such as a client device with a user interface, a web browser, or an app, through which a user can interact with the implemented subject matter. For instance, the described functionality could be implemented solely on a client device (e.g., for on-device machine learning) or deployed as a combination of front-end and back-end components for more complex applications. These components, when present, can be interconnected using any form or medium of digital data communication, such as a communication network like a local area network (LAN) or a wide area network (WAN) including the Internet. The specific system architecture and choice of components will depend on factors such as the scale of the application, the need for real-time processing, data security requirements, and the desired user experience.

The computing system can include clients and servers that may be geographically separated and interact through a communication network. The specific type of network, such as a local area network (LAN), a wide area network (WAN), or the Internet, will depend on the reach and scale of the application. The client-server relationship is established through computer programs running on the respective computers and designed to communicate with each other using appropriate protocols. These protocols may include HTTP, TCP/IP, or other specialized protocols depending on the nature of the data being exchanged and the security requirements of the system. In certain embodiments, a server transmits data or instructions to a user's device, such as a computer, smartphone, or tablet, acting as a client. The client device can then process the received information, display results to the user, and potentially send data or feedback back to the server for further processing or storage. This allows for dynamic interactions between the user and the system, enabling a wide range of applications and functionalities.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

This specification includes the subject matter of the following clauses:
1. A method comprising:
   identifying a context of a first user device;
   identifying a second user device within a proximity of the first user device;
   determining relevant aspects of a local operating state of the first user device that are relevant to the context;
   performing an automated data exchange session between a first agent executing on the first user device and a second agent executing on the second user device to determine, one or more actions that each define an update to the local operating state, wherein the automated data exchange session comprises one or more conversation turns being generated by using a generative neural network based on the relevant aspects of the local operating state of the first user device; and
   performing the one or more actions by the first user device to update the local operating state of the first user device.
2. The method of clause 1, wherein the one or more actions comprise an action to display audio content by an audio output device of the first user device.
3. The method of clause 1, wherein the one or more actions comprise an action to display visual content by a display device of the first user device.
4. The method of clause 1, wherein the one or more actions comprise an action to adjust one of a plurality of adjustable settings of the first user device.
5. The method of clause 4, wherein the plurality of adjustable settings comprise: a volume level setting, a brightness level setting, an airplane mode setting, or a sleep mode setting.
6. The method of clause 1, wherein performing the conversation session comprises:
   transmitting a first conversation turn from the first user device to the second user device, the first conversation turn being generated by using the generative neural network by processing a prompt that includes data generated based on the relevant aspects of the local operating state of the first user device.
7. The method of clause 1, wherein performing the conversation session comprises:
   receiving a second conversation turn by the first user device from the second user device, the second conversation turn being generated by the generative neural network based on processing a prompt that includes data stored in an application executing on the second user device.
8. The method of clause 6, wherein the generative neural network is implemented on the first user device.
9. The method of clause 6, wherein the generative neural network is implemented on a server that is remote from the first user device.
10. A method comprising:
   performing an automated data exchange session between a first agent executing on a first user device and a second agent executing on the second user device to determine one or more actions that each define an update to a local operating state of the first user device, wherein the automated data exchange session comprises one or more conversation turns that are generated by using a generative neural network; and
   performing the one or more actions by the first user device to update the local operating state of the first user device.
11. A system comprising one or more computers and one or more storage devices storing instructions that when executed by the one or more computers cause the one more computers to perform operations comprising:
   identifying a context of a first user device;
   identifying a second user device within a proximity of the first user device;
   determining relevant aspects of a local operating state of the first user device that are relevant to the context;
   performing an automated data exchange session between a first agent executing on the first user device and a second agent executing on the second user device to determine, one or more actions that each define an update to the local operating state, wherein the automated data exchange session comprises one or more conversation turns being generated by using a generative neural network based on the relevant aspects of the local operating state of the first user device; and
   performing the one or more actions by the first user device to update the local operating state of the first user device.
12. The system of clause 11, wherein the one or more actions comprise an action to display audio content by an audio output device of the first user device.
13. The system of clause 11, wherein the one or more actions comprise an action to display visual content by a display device of the first user device.
14. The system of clause 11, wherein the one or more actions comprise an action to adjust one of a plurality of adjustable settings of the first user device.
15. The system of clause 14, wherein the plurality of adjustable settings comprise: a volume level setting, a brightness level setting, an airplane mode setting, or a sleep mode setting.
16. The system of clause 11, wherein performing the conversation session comprises:
   transmitting a first conversation turn from the first user device to the second user device, the first conversation turn being generated by using the generative neural network by processing a prompt that includes data generated based on the relevant aspects of the local operating state of the first user device.
17. The system of clause 11, wherein performing the conversation session comprises:
   receiving a second conversation turn by the first user device from the second user device, the second conversation turn being generated by the generative neural network based on processing a prompt that includes data stored in an application executing on the second user device.
18. The system of clause 16, wherein the generative neural network is implemented on the first user device.
19. The system of clause 16, wherein the generative neural network is implemented on a server that is remote from the first user device.
20. One or more non-transitory computer storage media storing instructions that when executed by one or more computers cause the one more computers to perform operations comprising:
   identifying a context of a first user device;
   identifying a second user device within a proximity of the first user device;
   determining relevant aspects of a local operating state of the first user device that are relevant to the context;
   performing an automated data exchange session between a first agent executing on the first user device and a second agent executing on the second user device to determine, one or more actions that each define an update to the local operating state, wherein the automated data exchange session comprises one or more conversation turns being generated by using a generative neural network based on the relevant aspects of the local operating state of the first user device; and
   performing the one or more actions by the first user device to update the local operating state of the first user device.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

## Claims

1. A method comprising:
identifying a context of a first user device;
identifying a second user device within a proximity of the first user device;
determining relevant aspects of a local operating state of the first user device that are relevant to the context;
performing an automated data exchange session between a first agent executing on the first user device and a second agent executing on the second user device to determine, one or more actions that each define an update to the local operating state, wherein the automated data exchange session comprises one or more conversation turns being generated by using a generative neural network based on the relevant aspects of the local operating state of the first user device; and
performing the one or more actions by the first user device to update the local operating state of the first user device.

2. The method of claim 1, wherein the one or more actions comprise an action to display audio content by an audio output device of the first user device.

3. The method of claim 1 or 2, wherein the one or more actions comprise an action to display visual content by a display device of the first user device.

4. The method of any of claims 1 to 3, wherein the one or more actions comprise an action to adjust one of a plurality of adjustable settings of the first user device.

5. The method of claim 4, wherein the plurality of adjustable settings comprise: a volume level setting, a brightness level setting, an airplane mode setting, or a sleep mode setting.

6. The method of any preceding claim, wherein performing the conversation session comprises:
transmitting a first conversation turn from the first user device to the second user device, the first conversation turn being generated by using the generative neural network by processing a prompt that includes data generated based on the relevant aspects of the local operating state of the first user device.

7. The method of any preceding claim, wherein performing the conversation session comprises:
receiving a second conversation turn by the first user device from the second user device, the second conversation turn being generated by the generative neural network based on processing a prompt that includes data stored in an application executing on the second user device.

8. The method of claim 6, wherein the generative neural network is implemented on the first user device.

9. The method of claim 6, wherein the generative neural network is implemented on a server that is remote from the first user device.

10. The method of any one of the preceding claims, wherein the local operating state of the first user device comprises a state of the audio capability, display capability and/or processing capability of the first user device.

11. The method of claim 10, wherein the relevant aspects of the local operating state comprise relevant aspects of the audio capability of the first device.

12. The method of claim 10 or claim 11, wherein the relevant aspects of the local operating state comprise relevant aspects of the display capability of the first device.

13. The method of any of claims 10 to 12, wherein the relevant aspects of the local operating state comprise relevant aspects of the processing capability of the first device.

14. A system comprising one or more computers and one or more storage devices storing instructions that when executed by the one or more computers cause the one more computers to perform operations comprising the method of any one of claims 1 to 13.

15. One or more non-transitory computer storage media storing instructions that when executed by one or more computers cause the one more computers to perform operations comprising the method of any one of claims 1 to 13.
